# EUROPEAN PATENT APPLICATION

(11) **EP 2 650 810 A1**
(43) Date of publication of application: **16.10.2013**
(21) Application number: 12002618.2
(22) Date of filing: 13.04.2012
(51) Int. Cl.: G06F 21/00

(54) **A method for identifying and authenticating a user via a portable device**

(71) Applicant: Baylina Melé, Jordi, 08029 Barcelona (ES)
(72) Inventor: Baylina Melé, Jordi, 08029 Barcelona (ES)
(74) Representative: Torner Lasalle, Elisabet

(57) **Abstract**

The method comprises:
a1) associating, a user server (US) in collaboration with an authoritative user server (AUS), a user's portable device (MT) with an email address; and
a2) once associated, performing one or more future authentications against a third party using said association of step a1) without the intervention of the user.

## Description

### Field of the art

The present invention relates to a method for identifying and authenticating a user via a portable device, comprising associating a user's portable device with an email address and performing one or more future authentications against a third party using said association without the intervention of said user.

The invention is particularly applicable to the controlled opening, by means of a user's portable device, of a physical or virtual door.

### Prior State of the Art

Several methods for identifying and authenticating a user via a portable device are known, which whether require the intervention of the user for future authentications against a third party, after a first authentication, and/or implement complex mechanisms.

US2011219427 discloses techniques for simplifying an authentication process from the viewpoint of a user while providing improved security to the many users currently employing no or weak security techniques. In logging into a web site hosted by a web server, a session begins by a user connecting and logging in with a device, such as a personal computer. Rather than a user name and password approach, the personal computer communicates with another user device, such as a smart phone. In one approach, an encoded acoustic signal is employed for this communication. The smart phone securely communicates with an authentication server which informs the web server whether the user has been authenticated or not.

No association process is disclosed in US2011219427, neither for the user device or smart phone with user's identifying data nor between any other elements intervening in the authentication process there proposed.

### Summary of the Invention

It is necessary to provide an alternative to the state of the art which provides a simple, safe and quick mechanism for identifying and authenticating a user via a portable device.

To that end, the present invention relates to a method for identifying and authenticating a user via a portable device, said portable device having computing and communication capacities, wherein, on contrary to the known methods, the method of the invention comprises, in a characteristic manner:
a1) associating, a user server in collaboration with an authoritative user server, a user's portable device with an email address; and
a2) once associated, performing one or more future authentications against a third party using said association of step a1) without the intervention of said user.

Other user identification elements used in said step a1) instead of said email address (such as a hashtag, a phone number, etc.) must be considered equivalent to the email address, and are therefore covered by the scope of the invention by equivalence.

For an embodiment, said association process of step a1) comprises:
i) the user's portable device requesting/prompting the user for an e-mail address;
ii) the user providing, in response to the request/prompt, an e-mail address;
iii) the portable device generating a public/private key;
iv) sending, the user's portable device to an authoritative user server, said user's email and asking to the latter which is the authoritative URL for that email;
v) sending, the authoritative user server to the user's portable device, at least the requested authoritative URL;
vi) accessing the user's portable device to the user server by using said authoritative URL, and requesting the association of his email address to his portable device, said request being sent together with a public key;
vii) sending, the user server, an email to the user's email address with a URL link to a large random number which directs to the same user server;
viii) accessing the user, the user server via said URL link; via the portable device or via other means; and
ix) after said URL link access performed by the user, associating, the user server, the user's email address with its portable device.

For an embodiment, the method of the invention comprises, after the step a1), opening a door via the portable device by performing the following steps:
b) sending, said user's portable device to a door server, a request of information about said door;
c) sending, said door server to said user's portable device, in response to said request, information about the door in a HTML format providing a web page access (for example by the providing of a WEB form);
d) requesting said user to open said door by interacting with said web page via its portable device, said request comprising:
   d1) sending, the user's portable device to said user server, an open door call comprising user's information, including at least said user's email address, an authorization token (generated with said public key of step iii)) and an identifier of said door; and
   d2) forwarding, said user server to said door server, said open door call;
e) asking, the door server to said authoritative user server intervening in said user's email address and portable device association, which is the user server authorized for said user by sending a request including the user's email address,
f) receiving a response to said question of step f) including an authoritative URL;
g) verifying the authenticity of the call and user against said door server, which is said third party, by implementing said step a2) performing the next actions:
   g1) asking, the door server to said user server, by using said authoritative URL, at least if it did that call; and
   g2) responding, the user server to the door server, to said asking of g1); and
h) performing, at least the door server, the actions necessary for opening the door.

According to an embodiment, said user's information of step d1) further includes personal user information.

For an embodiment, in step h) means are provided from the door server to the user server and from the latter to the user's portable device for opening said door.

Said means for opening said door comprises, for a variant of said embodiment, an opening code, such as a cyclic opening code.

The method comprises, for an embodiment, said user server providing said opening code embedded in a web page.

The method comprises, for an embodiment, said user's portable device automatically providing said opening code to a door automatic opening mechanism for opening the door, for example in the form of a sound.

The method of the invention comprises, for an embodiment, each time access to the authoritative user server is done, further sending, the authoritative user server to the user's portable device, together with the requested authoritative URL a time to live parameter informing the user that said authoritative URL is valid until a predetermined period expires, moment at which the user must ask again for another authoritative URL.

Said open door call of step d2) includes, for an embodiment, an authorization random number unique for any door call.

For an embodiment, said verification step g) is done one time for each door access.

For an embodiment said door is a physical door, the method comprising, for a preferred implementation of said embodiment, scanning, with the user's portable device, a door identifier of said physical door including a door URL, and performing said information request sending of step b) to the door server by following said door URL.

For another embodiment, the door is a virtual door, such as a login application or a payment system.

Said virtual door is, for a variant of said embodiment, a login door that is generated by the following steps:
- provide a plugin/extension in a browser of a computer;
- the plugin/extension analyses all the pages of any domain a user visits, through said browser, and if it detects a login form a new door is created by performing the following steps:
   - generate inside the browser a new public/private key for a login session;
   - generate a unique random number by means of a hash of said new public key;
   - register the session with a door server; and
   - show, in a visualization means of said computer, a QR barcode associated to said login door, obtained from said random number, with an encoded link to the door server, together with said login form, and
   - starting a polling to the door server to check if someone receives a user/password.

The method comprising, for an embodiment, scanning, with the user's portable device, said QR barcode of said login door which includes a door URL, and performing said information request sending of step b) to the door server by following said door URL.

Said web page provided at step c) includes, for an implementation of said embodiment, fields for the introduction, for said login form, of a user/password by the user or for the retrieval of said user/password from an already saved user/password of a previous session, the method further comprising the sending of the requested user/password to the user server, at d1), encrypted with the public key generated at step iii), if not already saved, and also to the door server, encrypted with said new public key, and performing the rest of steps d2) to h).

In response to said polling, the door server communicates the received user/password encrypted with the new public key to the browser plugin/extension which decrypts it by using the new private key and applies them to the login form as part of said actions necessary for opening the door of step h).

For another embodiment, the method of the invention is applied to implement a customer tracking, where the third party of step a) is a tracking server.

### Brief Description of the Drawings

The previous and other advantages and features will be more fully understood from the following detailed description of embodiments, with reference to the attached, which must be considered in an illustrative and non-limiting manner, in which:
Fig. 1: First Association. This Figure schematically shows the association process of the method of the invention, for an embodiment, including the entities participating in said process;
Fig. 2: Authentication to third party (DS). This Figure schematically shows an embodiment of the method of the invention applied to the opening of a physical or virtual door including an authentication to third party DS; and
Fig. 3: Login Door Creation. This Figure schematically shows part of the communications established between a plugin installed in a user's computer and a door server in order to open a login door (a kind of virtual door), for an embodiment of the method of the invention.

### Detailed Description of Several Embodiments

### - Elements in the System used for implementing the method of the invention:

- Mobile terminal (phone) or **MT.**
- **AUS** (Authoritative User Server)
- User Server or **US**
- Login/Door/Application Server **(LS** or **DS)**
- Authentication Element (Browser plugin for the login application or a specific electronic device for a physical door).

### - First time association:

The first step is to associate a mobile phone with an email address.

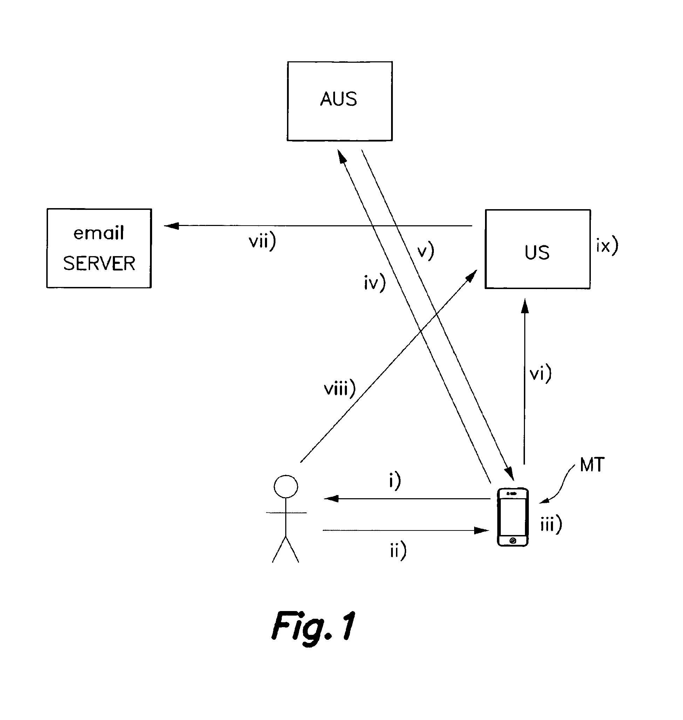

As explained above, for a preferred embodiment the association process of step a1) comprises performing the next steps, which are indicated in Fig. 1:
i) the user's portable device MT requesting/prompting the user for an e-mail address;
ii) the user providing in response an e-mail address;
iii the portable device MT generating a public/private key;
iv) sending, the user's portable device MT to an authoritative user server AUS, said user's email and asking to the latter which is the authoritative URL for that email;
v) sending, the authoritative user server AUS to the user's portable device MT, at least the requested authoritative URL;
vi) accessing the user's portable device MT to the user server US by using said authoritative URL, and requesting the association of his email address to his portable device MT, said request being sent together with a public key;
vii) sending, the user server US, an email to the user's email address (i.e. to the email server) with a URL link to a large random number which directs to the same user server US;
viii) accessing the user, the user server US via said URL link; this step having been indicated in Fig. 1 on the arrow going from the user to the user server US, but obviously this URL link access will be done via a terminal equipment of the user, whether the portable device MT or another user terminal; and
ix) after said URL link access performed by the user, associating, the user server US, the user's email address with its portable device MT.

A particular protocol implementation of the above steps is performed as follows:

Once the User downloads the here called UNICLAU Mobile Application (from the appstore for example), the protocol to associate the phone with a specific email address is the following:
1.- The user puts his email address into the phone.
2.- The phone generates a public/private key and stores it into the Keychain of the MT.
3.- The MT asks the AUS server which is the authoritative URL for that mail.
   MT -> AUS
   **GetAuthoritativeServer:**
   In -> User (email address)
   Out -> Result (Ok or Error with details)
   Out -> Authoritative URL
   Out-> TTL.
4.- The AUS returns the Authoritative URL and a TTL (Time to live). The MT will not ask which is the Authoritative server for that User until the TTL expires (TTL is the time that this info can be cached in seconds) and will keep this information in the cache.
5.- The MT tells this Authoritative URL (In the User Server) that he wants to associate this email address with this phone. During this step we also send the public key generated before to the User server.
   MT->US
   **AssociationRequest:**
   In -> User
   In -> Public key
   In -> Phone ID (Only for informational purposes).
   In -> RecoveryKeyF (See the recovery key chapter).
   Out -> Result
6.- The User Server (US) sends an email to the email address with a link with a large random number.
7.- The user checks his email and follows the link (A URL to the same User Server).
8.- The User Server now knows that the email address inserted in step 1 is valid and the user has access to it. At this time the phone is associated with that email address.
9.- The MT can check the state of the association with a call to the User Server.
   MT->US
   **AssociationTest**
   In -> User
   In -> AuthToken (Signature of the call)
   Out -> Key Release (See recovery keys chapter)
   Out -> Result
   Out -> Commercial Info (How many access left, expiration date, etc)

Except for the AssociationRequest call, the rest of the calls to the User Server from now on will always be signed with the user's private key.

### - Opening of a physical door application:

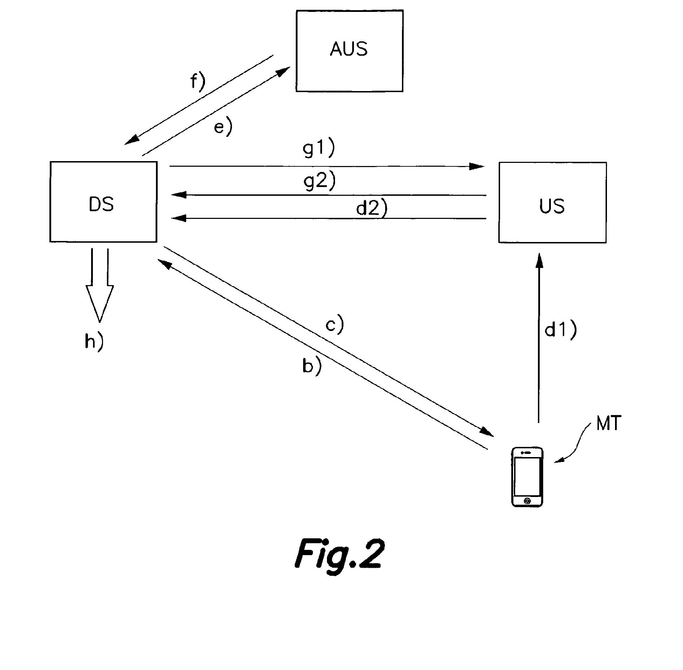

As explained in a previous section, for an embodiment, which is illustrated in Fig. 2, the method of the invention is applied to the opening of a door via the portable device MT, for which purpose it comprises performing, after said step a1), the following steps, which are correspondingly indicated at the right entities/arrows of Fig. 2:
b) sending, the user's portable device MT to a door server DS, a request of information about said door;
c) sending, the door server DS to the user's portable device MT, in response to said request, information about the door in a HTML format providing a web page access;
d) requesting the user to open said door by interacting with said web page via its portable device MT, said request comprising:
   d1) sending, the user's portable device MT to the user server US, an open door call comprising user's information, including at least said user's email address, an authorization token and an identifier of said door; and
   d2) forwarding, the user server US to said door server DS, said open door call;
e) asking, the door server DS to said authoritative user server AUS intervening in said user's email address and portable device MT association, which is the user server US authorized for said user by sending a request including the user's email address,
f) receiving a response to said question of step e) including an authoritative URL;
g) verifying the authenticity of the call and user against said door server DS, which is said third party, by implementing said step a2) performing the next actions:
   g1) asking, the door server DS to said user server US, by using said authoritative URL, at least if it did that call; and
   g2) responding, the user server US to the door server DS, to said asking of g1);
   and
h) performing, at least the door server DS, the actions necessary for opening the door.

The actions performed in h) depend on which kind of door they are applied: if a physical door or a virtual door.

A particular implementation of said embodiment referring to a physical door is next described, specifying the commands used according to a specific protocol:

It starts with the already associated MT.
1.- The User scans a barcode with the doorURL with his MT
   URL example: http://www.examplecompany.com/doors/maindoor
2.- The MT asks the Door Server info about the door.
   MT->DS
   **Doorlnfo**
   Out -> Result
   Out -> Door name
   Out -> A web page with the info of the page.
   This info Web page can communicate with the MT thru a Javascript API. For the physical door it is not necessary to use this API, but we will see that this is fundamental for many applications. We will see it in the Login application. This API mainly is a ReadData and WriteData that emulates the WEB cookies, but they are associated to the User not to the Browser Session. More information follows below when describing the variant referring to a login door (kind of virtual door).
3.- Once the User sees this door info in the MT, he decides to open the door by pressing the green button in the application. Next to this green button always appears the domain name and the name of the door so the user knows exactly what is he giving access to.
4.- Once the button is pressed, the MT calls a Javascript method named GetOpenObject of the door info web page (If it implements it). The data returned from this function is propagated to the MT->US **OpenDoor** call and also to the US -> DS OpenDoor call. This data is propagated to the door.
   MT application -> Door Web Info (Javascipt)
   **GetOpenObject**
   Out -> OpenObecjt (Generally a string containing a JSON object).
5.- In the physical door info web page the **GetOpenObject** is not implemented so the open object does not exists.
6.- Now, the MT sends to the US (not to the DS) the **OpenDoor** call
   MT->US
   **OpenDoor**
   In -> User
   In -> AuthToken
   In -> DoorURL
   In -> OpenObject
   Out ->Result
   Out -> A web page that is showed to the User.
   Out -> Commercial Info (How many accesses left, expiration date, etc.)
7.- When the US receives this call, it forwards to the DS.
   US->DS
   **OpenDoor**
   In -> User
   In -> AuthToken
   In -> Salt (Just a random number to generate different hashes for similar calls).
   In -> OpenObject
   Out ->Result'
   Out -> A web page that is showed to the User.
8.- The door server asks the AUS which is the User Authoritative server for the user that wants to open that door.
   MT -> AUS
   **GetAuthoritativeServer:**
   In -> User (email address)
   Out -> Result (Ok or Error with details)
   Out -> Authoritative URL
   Out-> TTL.
9.- To verify the authenticity of the call, the DS asks the US server returned to the AUS if the call is valid.
   DS->US
   **VerifyHash**
   In -> Hash (A hash to the **OpenDoor** call made by the US to the DS).
   Out -> Result (0 if the US really did a call with that hash in the last 10 minutes).
   The calls from the US to the DS can only be verified once.
10.- At this moment, we can be certain that someone with access to the User's email has tried to open the door. If that user has access to that door, then we open the door by sending back a web page with an embedded sound that when played near the door, opens the door, these actions being the actions of step h) necessary for opening the door.
11.- Last, the TE shows the **OpenDoor** result web that automatically plays that code. And the door opens

### - Cyclic codes:

The codes that allow the server to open the door, but just once, is the same system used on a garage door remote control:

### 1.- DS and the physical door electronics share a symmetric key called K.

DS has a state with the last number given. Let's call it *state*_*DS1*. PD (physical door) has a state with the last number opened. Let's call it *state_PD*.

When a new access is given to a user, a code is generated with the following procedure.

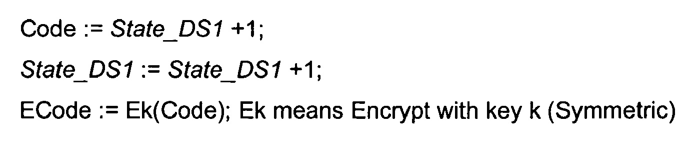

This ECode is the one that is embedded in the result web page and converted to a sound wave that the door can decode.

The door, when receiving the ECode, performs the following procedure

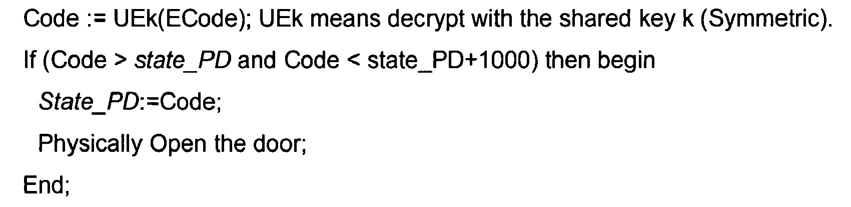

In this example 1000 numbers can be generated from the DS before the door desynchronizes. This number can be adjusted.

### - Open a login door (kind of virtual door):

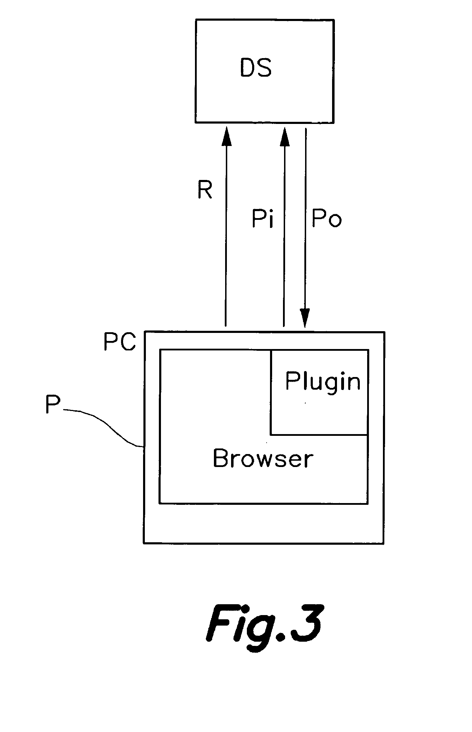

For this embodiment of the method of the invention, partially illustrated by Fig. 3, the door is a login door (kind of virtual door) that is generated by the following steps:
- provide a plugin/extension in a browser of a computer PC;
- the plugin/extension analyses all the pages of any domain a user visits, through said browser, and if it detects a login form a new door is created by performing the following steps:
- generate inside the browser a new public/private key for a login session;
- generate a unique random number by means of a hash of said new public key;
- register the session with a door server DS, said register action having being indicated as R in Fig. 3; and
- show, in a visualization means P of said computer PC, a QR barcode associated to said login door, obtained from said random number, with an encoded link to the door server DS, together with said login form, and
- starting a polling to the door server DS to check if someone receives a user/password; said polling having being represented as Pi, for the inputs to the DS, also referred below as Login Server (LS), and as Po for the responses of the latter to the user's computer PC.

A particular implementation of said embodiment referring to a kind of virtual door is next described, specifying the commands used according to a specific protocol:

For the login application, a plugin (or extension) for the browser of user's computer PC has been developed. Once the plugin is installed a javascript is executed every time that a user visits a new web page of any domain.

If this javascript detects a user/password form in the page, then it does the following tasks:
- Generates a new public/private key for this LoginSession.
- Generates a new large unique random number called LoginSession, which is a hash of said new public key.
- Registers this session with the login server
- Shows a QR barcode besides the user/password form with an encoded link to the LS (Login Server) and the LoginSession as the parameters. (Example: https://login.uniclau.com/logins.php ?LoginSession=5324352345223452323452345)
- After this, it starts doing a polling to the Server to check if someone receives the user/password.

The call to register and to make the polling is next.
Plugin -> LS
**WaitForLogin**
In -> LoginSession
In -> Domain (The domain of the web page that the user is browsing).
In -> PublicKey
Out -> Result
Out -> Credentials (Encrypted with the public key the user and password that must be applied to the user/password form).

This last parameter is only returned if an access is done from some MT. This call (over http) can take several seconds to return if no new credentials are sent, but it returns immediately when new credentials are available.

When new credentials are received, they will be decrypted with the private plugin key and will be applied to the user/password form. If the credentials are OK, the plugin will be done.

After that, the browser is waiting for the encrypted credentials.

When the user scans the OR code generated by the plugin, the MT sends a **Doorlnfo** query to the login server with the LoginSession as the parameter. The LS returns a web with the login session, the domain and the public key.

This web page is executed in the MT. When the page is loaded, a special javascript call is made to ask the MT if there are credentials saved from previous accesses for this domain.

Door Info Web Page -> MT
**ReadData**
In -> Rules (Which condition must meet the Application Key Name)
Out -> Data (An array with all the items that meets the rules. Each item consist of the next fields)
ApplicationKey
Value
Writer -> User that wrote this data in case it is different from
ourselves.
WriteDate -> When this data was last written.

When the MT receives this info, it sends the request to the US.

MT -> US
**ReadData**
In-> User
In -> AuthToken
In -> Application (The domain name of the url)
In -> Rules
Out -> Result
Out -> Data

The MT decrypts the data with its private key and sends it back to the door info web.

Like regular cookies, all the data saved in the US database for that user is isolated from domain to domain (Application parameter). And all the data saved in the US is encrypted with the User Public Key, so that it is only accessible to the MT associated with the user who has the private key.

When the Door Info page receives all the available credentials that were stored in the past, the JS code of the Info Web Page is put in a combo box. The JS code also inserts an option to enter new credentials manually (User Password for the login session we are acceding).

The user now enters his new credentials or selects an old one.

Then he pushes the green button and at this time the next sequence is executed:
1.- The MT executes the **GetOpenObject** javascript method inside the Door Info Web page.
2.- If the user entered new credentials, they are saved to the user database. This is done by calling the Special API WriteData to the MT.
   Door Info Web Page -> MT
   **WriteData**
   In -> Data (Array of items containing data to be saved to the User Database) The items have the following fields.
   ApplicationKey
   Value
   Reader (Who will be able to read the data--generally null, indicating ourselves).
3.- The second thing that the **GetOpenObject** javascript method does is to encrypt the credentials with the public key generated by the plugin, which is unique to this LoginSession. This encrypted credentials are returned back in the **GetOpenObject** call and conform the OpenObject for this access.
4.- The MT completes the WriteData encrypting the data with the user public key and calling the **WriteData** to the US.
   MT-> SU
   **WriteData**
   In -> User
   In -> AuthToken
   In -> Application (The domain name of the application in this case
   login.uniclau.com
   In -> Data (ApplicationKey/Value/Reader items to store in the reader
   Database.
   Out -> Results (An array o results for each item).

If the authoritative server of the readers of this call is different from the User's one, then a special Inter US call is called to store the data in the reader's database. This call is called **WriteDataR.** The authenticity of this call is checked with the same mechanism that the DS checks the calls from the USs calling the **CheckHash** Function
SU1-> SU2
**WriteDataR**
In -> User
In -> Salt
In -> Application
In -> Data
Out -> Results

At this point, the credentials are stored into the user database, so next time the user accesses this web page, he will be able to restore the used credentials.

Next, the MT calls the **OpenDoor** method in the same way as that for physical doors, and the SU calls the **OpenDoor** method of the LS. But this time, these calls are called with the OpenObject parameter. This OpenObject contains the credentials entered by the user encrypted with the public key of the plugin.

The LS now forces the **WaitForLogin** call to return with the credentials. If the server is not waiting for the login, it will return in the next call of the **WaitForLogin** immediately.

And finally, the plugin takes this EncryptedCredentials, decrypts it using the private key at the beginning of the login session, puts it in the user/password form and submits the form, these actions being the included in the above mentioned necessary actions for opening the door of step h).

The OpenDoor Call, just returns a simple web indicating that the login should already be performed.

A person skilled in the art could introduce changes and modifications in the embodiments described without departing from the scope of the invention as it is defined in the attached claims.

## Claims

1. A method for identifying and authenticating a user via a portable device, said portable device (MT) having computing and communication capacities, wherein the method is **characterized in that** it comprises:
a1) associating, a user server (US) in collaboration with an authoritative user server (AUS), a user's portable device (MT) with an email address; and
a2) once associated, performing at least one future authentication against a third party using said association of step a1) without the intervention of said user.

2. The method of claim 1, wherein said association process of step a1) comprises:
i) the user's portable device (MT) requesting/prompting the user for an e-mail address;
ii) the user providing in response an e-mail address;
iii) the portable device (MT) generating a public/private key;
iv) sending, the user's portable device (MT) to an authoritative user server (AUS), said user's email and asking to the latter which is the authoritative URL for that email;
v) sending, the authoritative user server (AUS) to the user's portable device (MT), at least the requested authoritative URL;
vi) accessing the user's portable device (MT) to the user server (US) by using said authoritative URL, and requesting the association of his email address to his portable device (MT), said request being sent together with a public key;
vii) sending, the user server (US), an email to the user's email address with a URL link to a large random number which directs to the same user server (US);
viii) accessing the user, the user server (US) via said URL link; and
ix) after said URL link access performed by the user, associating, the user server (US), the user's email address with its portable device (MT).

3. The method of claim 1 or 2, comprising, after said step a1), opening a door via said portable device (MT) by performing the following steps:
b) sending, said user's portable device (MT) to a door server (DS), a request of information about said door;
c) sending, said door server (DS) to said user's portable device (MT), in response to said request, information about the door in a HTML format providing a web page access;
d) requesting said user to open said door by interacting with said web page via its portable device (MT), said request comprising:
d1) sending, the user's portable device (MT) to said user server (US), an open door call comprising user's information, including at least said user's email address, an authorization token and an identifier of said door; and
d2) forwarding, said user server (US) to said door server (DS), said open door call;
e) asking, the door server (DS) to said authoritative user server (AUS) intervening in said user's email address and portable device (MT) association, which is the user server (US) authorized for said user by sending a request including the user's email address,
f) receiving a response to said question of step e) including an authoritative URL;
g) verifying the authenticity of the call and user against said door server (DS), which is said third party, by implementing said step a2) performing the next actions:
g1) asking, the door server (DS) to said user server (US), by using said authoritative URL, at least if it did that call; and
g2) responding, the user server (US) to the door server (DS), to said asking of g1);
and
h) performing, at least the door server (DS), the actions necessary for opening the door.

4. The method of claim 3, wherein said user's information of step d1) further includes personal user information.

5. The method of claim 3, wherein in step h) means are provided from the door server (DS) to the user server (US) and from the latter to the user's portable device (MT) for opening said door.

6. The method of claim 5, wherein said means for opening said door comprises an opening code.

7. The method of any of claims 2 to 6, wherein each time access to the authoritative user server (AUS) is done, further comprising sending, the authoritative user server (AUS) to the user's portable device (MT), together with the requested authoritative URL a time to live parameter informing the user that said authoritative URL is valid until a predetermined period expires, moment at which the user must ask again for another authoritative URL.

8. The method of claim 3, wherein said open door call of step d2) includes an authorization random number unique for any door call.

9. The method of claim 3, wherein said verification step g) is done one time for each door access.

10. The method of any of claims 3 to 9, wherein said door is a physical door, the method comprising scanning, with the user's portable device (MT), a door identifier of said physical door including a door URL, and performing said information request sending of step b) to the door server (DS) by following said door URL.

11. The method of any of claims 3 to 9, wherein the door is a virtual door.

12. The method of claim 11, wherein the virtual door is a login door that is generated by the following steps:
- provide a plugin/extension in a browser of a computer (PC);
- the plugin/extension analyses all the pages of any domain a user visits, through said browser, and if it detects a login form a new door is created by performing the following steps:
- generate inside the browser a new public/private key for a login session;
- generate a unique random number by means of a hash of said new public key;
- register the session with a door server (DS); and
- show, in a visualization means (P) of said computer (PC), a QR barcode associated to said login door, obtained from said random number, with an encoded link to the door server (DS), together with said login form, and
- starting a polling to the door server (DS) to check if someone receives a user/password.

13. The method of claim 12, comprising scanning, with the user's portable device (MT), said QR barcode of said login door which includes a door URL, and performing said information request sending of step b) to the door server (DS) by following said door URL.

14. The method of claim 13, wherein said web page provided at step c) includes fields for the introduction, for said login form, of a user/password by the user or for the retrieval of said user/password from an already saved user/password of a previous session, the method further comprising the sending of the requested user/password to the user server (US), at d1), encrypted with the public key generated at step iii), if not already saved, and also to the door server (DS), encrypted with said new public key, and performing the rest of steps d2) to h).

15. The method of claim 14, wherein, in response to said polling, said door server (DS) communicates the received user/password encrypted with the new public key to the browser plugin/extension which decrypts it by using the new private key and applies them to the login form as part of said actions necessary for opening the door of step h).
